(19) Europäisches Patentamt
European Patent Office
Office européen des brevets

(11) Publication number: 0 175 824
A1

# (12) EUROPEAN PATENT APPLICATION

(21) Application number: 84306515.2

(22) Date of filing: 25.09.84

(51) Int. Cl.[4]: B 22 F 9/24
C 22 B 15/10

(43) Date of publication of application:
02.04.86 Bulletin 86/14

(84) Designated Contracting States:
BE DE FR GB IT NL

(71) Applicant: Sherritt Gordon Mines Limited
2800 Commerce Court West
Toronto, Ontario(CA)

(72) Inventor: Mackiw, Vladimir N.
9 Blair Athol Crescent
Etobicoke Ontario(CA)

(72) Inventor: Nadezhdin, Alexander
3007-139th Avenue
Edmonton Alberta(CA)

(72) Inventor: Weir, Donald R.
10228-109th Street
Fort Saskatchewan Alberta(CA)

(74) Representative: Lambert, Hugh Richmond et al,
D. YOUNG & CO. 10 Staple Inn
London, WC1V 7RD(GB)

## (54) Production of fine spherical copper powder.

(57) A process for the production of fine copper powder with particles having a size less than about 5 micrometres, comprises providing an ammoniacal cuprous salt solution, and neutralizing ammonia in said solution with acid in a substantially oxygen-free environment to produce substantially oxygen-free fine spherical copper powder.

Croydon Printing Company Ltd.

# PRODUCTION OF FINE SPHERICAL COPPER POWDER

This invention relates to the production of fine copper powder, that is to say comprising particles with a size less than about 5 micrometres and with an average size of about 1 to about 3 micrometres.

There is a commercial requirement for fine copper powder which is relatively oxygen-free namely less than about 1% oxygen by weight, and which comprises substantially spherical and separate particles to provide a relatively high bulk density. It is difficult to obtain fine copper powder conforming to these requirements by use of known processes.

Fine copper powder with acceptable physical properties can be produced by hydrogen reduction of an ammoniacal copper sulphate slurry in an autoclave. However, fine copper powder produced by such a process is usually found to contain an undesirably high amount of oxygen which is difficult to remove while at the same time preserving the desirable properties of the copper powder.

It is also known to produce fine copper powder by causing the disproportionation of cuprous ions in accordance with the following reaction:

$$2Cu^{+} \rightleftharpoons Cu^{\circ} + Cu^{2+}$$

A process of this kind is described in "Copper(1) Disproportionation Equilibrium in a Sulphuric Acid Medium at 100-200°C" by Klyain et al, published in Izv. Vyssh. Ucheb. Zaved., Tsvet. Met. 1974, 17 (3), 27-32. It utilizes the known temperature dependence of the disproportionation equilibrium with the equilibrium being shifted with decreasing temperature towards the formation of copper powder.

A further process of this kind is described in British patent No. 1,381,666 published in January, 1975 and utilizes the fact that the disportionation equilibrium is shifted towards cuprous ion formation by the presence of an organic nitrile, with subsequent production of copper powder by removal of the nitrile.

A Paper entitled "A New Chemical Process for the Production of High Purity Copper Powder from Copper Sulphate or Copper Nitrate Solutions" by Chupungco et al, published in Powder Metallurgy International Vol. 14, No. 4, 1982, describes a process comprising treating a cupric ammonium sulphate or nitrate complex with sulphur dioxide to precipitate a crystalline solid, which is then treated with sulphuric acid to produce metallic copper.

However, for various reasons, none of these prior processes is particularly suitable for commercial production of fine copper powder with the properties referred to above.

The present invention is based on the discovery that, when the disproportionation equilibrium is shifted towards cuprous ion formation by the presence of ammonia, the equilibrium can be shifted towards the formation of copper powder by the neutralization of ammonia with acid in a substantially oxygen free environment to produce fine copper powder with previously described desirable properties.

It has been found that the starting cuprous ion complex should have an ammonium to cuprous ion concentration of at least 4:1 in order to stabilize the cuprous ions

by formation of the tetrammoniacal cuprous ion $[Cu(NH_3)_4]^+$. The cuprous ion complex may be produced for example by dissolving metallic copper in an ammoniacal cupric salt solution in a substantially oxygen free atmosphere, preferably with an initial ammonia to copper molar ratio in the solution of at least 8:1 to maximize the formation of cuprous copper. An advantage of this feature is that the properties of the fine copper produced in accordance with the invention are independent of those of the metallic copper starting material. Alternatively, the starting cuprous ion complex may be produced by reduction of ammoniacal cupric salt solution with a reductant, for example hydrazine. The solution may conveniently be a sulphate solution.

The treatment of ammoniacal cuprous salt solution with acid such as sulphuric acid may be carried out in an agitated container under an oxygen free atmosphere or by passing the ammoniacal cuprous salt solution through a pipeline reactor under turbulent conditions. The pH should be lowered to less than about 3, preferably to about 1.5 to 2.5.

An embodiment of the invention will now be described by way of example, with reference to the accompanying drawing which shows a flow diagram of a process for producing fine copper powder.

Referring to the drawing, metallic copper material such as copper shot is contained in a tower 1 through which ammoniacal cupric sulphate solution is passed, the ammonia content of the solution being such that the ammonia to copper molar ratio is preferably about 8:1. The tower 1 is maintained at a temperature of at least 60°C, preferably about 75° to 80°, to promote dissolution of the copper to form a tetrammoniacal cuprous sulphate solution containing about 90 g/L $Cu^+$ and about 100 g/L $NH_3$ at a pH of about 9 in accordance with the following equation:

$$8NH_3 + CuSO_4 + Cu^\circ = [Cu(NH_3)_4]_2SO_4$$

Approximately one half of the tetrammoniacal cuprous sulphate solution from the top of the tower 1 is mixed with sulphuric acid solution and passed through a water cooled pipeline reactor 2 through which the mixed solutions flow in turbulent manner to lower the pH to 1.5 to 2.5 with resultant disproportionation of the cuprous ions to produce copper powder in accordance with the following equation:

$$[Cu(NH_3)_4]_2SO_4 + 4H_2SO_4 = Cu^\circ + CuSO_4 + 4(NH_4)_2SO_4$$

The resultant slurry is then passed to a thickener 3, the underflow being fine copper powder which is then filtered, washed and dried in an oxygen-free atmosphere.

The overflow solution from the thickener 3 contains copper sulphate and ammonium sulphate. This solution may for example be treated with hydrogen sulphide to precipitate copper sulphide and recover ammonium sulpate solution, or treated with lime to precipitate gypsum and produce ammonium cupric sulphate solution.

The other half of the cuprous ion complex solution from the top of the tower 1 is mixed with air and passed through an oxidation reactor in the form of a pipeline reactor 4 to oxidize the cuprous ion complex to a cupric ion complex which, with the addition of ammonia and water, is returned to the bottom of the tower 1.

By means of such a process in accordance with the present invention, it is possible to produce copper powder with a bulk density of up to 4.0 g/cm$^3$, with an average particle size of two or three micrometres, and an oxygen content of less than 1% by weight. It is also possible to produce fine copper powder with such properties and containing less than 0.02% sulphur. Further, when the starting copper material is contaminated with

other elements such as nickel, cobalt, arsenic or antimony, it has been found that the fine copper powder produced contains only minimal amounts of such elements.

Another anion, such as for example $Cl^-$ could be used instead of $SO_4^{2-}$ in the described process if desired.

Other examples and embodiments of the invention will be readily apparent to a person skilled in the art from the foregoing description.

## CLAIMS

1. A process for the production of substantially oxygen-free fine spherical copper powder having a particle size less than about 5 micrometres, characterized in that the process comprises neutralising an ammoniacal cuprous salt solution with acid in a substantially oxygen-free environment and recovering therefrom the precipitated copper powder.

2. A process according to claim 1 characterized in that the ammoniacal cuprous salt solution has an ammonia to cuprous ion concentration of at least 4 to 1.

3. A process according to claims 1 or 2 characterized in that said neutralization is effective to lower the pH of said ammoniacal cuprous salt solution to less than 3.

4. A process according to claim 3 characterized in that said pH is lowered to a value in the range 1.5 to 2.5.

5. A process according to any one of claims 1 - 4, characterized in that the ammoniacal cuprous salt solution is an ammoniacal cuprous sulphate solution and that the neutralisation is effected with sulphuric acid.

6. A process according to any one of claims 1 - 5, characterized in that the ammoniacal cuprous salt solution is prepared by dissolving metallic copper in an ammoniacal cupric salt solution in a substantially oxygen-free atmosphere.

7. A process according to claim 6 characterized in that the ammoniacal cupric salt solution used to prepare the ammoniacal cuprous salt solution has an initial ammonia to copper molar ratio in the solution of at least 8 to 1.

..../

8. A process according to claim 6 or 7 which, comprises passing ammoniacal cupric salt solution through a first reactor containing metallic copper to produce the ammoniacal cuprous salt solution by dissolution of metallic copper, and passing at least a portion of the ammoniacal cuprous salt solution from the first reactor through a second reactor with acid to neutralize ammonia in said solution and to produce said substantially oxygen-free fine spherical copper powder.

9. A process according to claim 8 wherein a portion of the ammoniacal cuprous salt solution from the first reactor is passed through a third reactor with an oxidant to oxidize the solution to ammoniacal cupric salt solution, and recycling the ammoniacal cupric salt solution thus produced to the first reactor with added ammonia.

10. A process according to claim 8 or 9 wherein said second reactor is a pipeline through which said ammoniacal cuprous salt solution from the first reactor together with the required acid to neutralize ammonia in said solution.

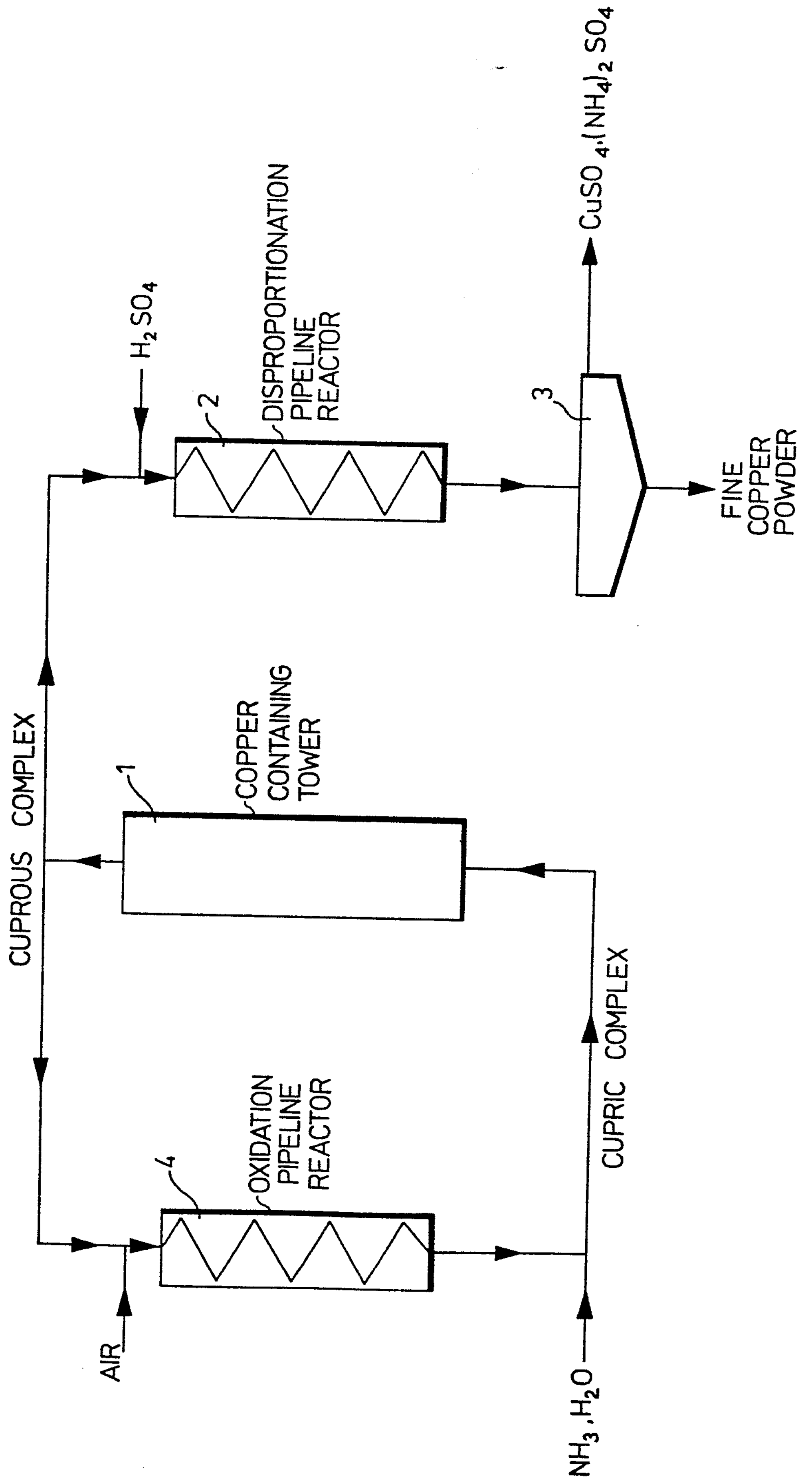

CUPROUS COMPLEX
$H_2SO_4$
2
DISPROPORTIONATION PIPELINE REACTOR
$CuSO_4.(NH_4)_2SO_4$
3
FINE COPPER POWDER
1
COPPER CONTAINING TOWER
CUPRIC COMPLEX
4
OXIDATION PIPELINE REACTOR
AIR
$NH_3, H_2O$

European Patent Office

# EUROPEAN SEARCH REPORT

0175824

Application number

EP 84 30 6515

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 492 115 (S. MAHALLA) * Claims 1,3,9; column 7, line 50 - column 8, line 25 * | 1-9 | B 22 F 9/24<br>C 22 B 15/10 |
| | --- | | |
| A | US-A-3 148 051 (E.J. CHUPUNGCO et al.) | | |
| | --- | | |
| A | US-A-3 228 765 (E.J. CHUPUNGCO et al.) | | |
| | --- | | |
| A | US-A-2 740 707 (W.A.O. HERRMANN) | | |
| | ----- | | |
| | | | TECHNICAL FIELDS SEARCHED (Int. Cl.4) |
| | | | B 22 F<br>C 22 B |

The present search report has been drawn up for all claims

| Place of search | Date of completion of the search | Examiner |
|---|---|---|
| THE HAGUE | 29-05-1985 | SCHRUERS H.J. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82